# EUROPÄISCHE PATENTSCHRIFT

(11) **EP 1 081 453 B1**
(45) Veröffentlichungstag und Bekanntmachung des Hinweises auf die Patenterteilung: **23.10.2002**
(21) Anmeldenummer: 00118700.4
(22) Anmeldetag: 30.08.2000
(51) Int. Cl.: G01B 7/02, G01B 7/30, G01D 5/246

(54) **Positionssensor für ein Kraftfahrzeug**
Position sensor for a motor vehicle
Capteur de position pour un véhicule automobile

(30) Priorität: 01.09.1999 DE 19941465
(43) Veröffentlichungstag der Anmeldung: 07.03.2001
(73) Patentinhaber: Hella KG Hueck & Co., 59552 Lippstadt (DE)
(72) Erfinder: Irle, Henning, 59557 Lippstadt (DE); Kost, Norbert, 59590 Geseke (DE); Schmidt, Franz-Josef, 33154 Salzkotten (DE)

(56) Entgegenhaltungen:
- EP-A- 0 260 531
- EP-A- 0 814 247
- DE-A- 19 738 841
- DE-C- 4 215 315
- US-A- 4 065 715
- US-A- 5 481 141
- US-A- 5 585 733

## Beschreibung

Die Erfindung betrifft einen Positionssensor für ein Kraftfahrzeug, mit mehreren unabhängig voneinander arbeitenden Meßsystemen, welche jeweils ein positionsabhängig variierendes pulsweitenmoduliertes Signal erzeugen.

Ein solcher Positionssensor ist aus der DE 197 38 841 A1 bekannt. Der in dieser Schrift dargestellte Positionssensor weist zwei voneinander unabhängig funktionierende Meßsysteme auf, die, zur Erhöhung der Sicherheit (redundanter Sensor), zwei positionsabhängig variierende pulsweitenmoduliertes Signale erzeugen.

Die US-A-4065715 beschreibt einen Positionssensor für die Drosselklappe eines Kraftfahrzeuges. Bei diesem Sensor wird eine Winkelstellung durch einen Kondensator erfaßt, dessen Kapazität die Pulsweite von drei pulsweitenmodulierten Signalen festlegt. Allerdings sind mehrere unabhängig voneinander arbeitende Meßsysteme aus dieser Entgegenhaltung nicht bekannt. Zwar werden bei dem dort beschriebenen Meßprinzip zwei pulsweitenmodulierte Signale durch ein Logikgatter zu einem weiteren pulsweitenmodulierten Signal verknüpft; das resultierende Signal ist aber das Ausgangssignal eines einzelnen Meßsystems.

Die EP-A-0260531 zeigt einen Positionssensor für die Messung der Drehwinkelstellung und des Drehmoments einer durch einen Elektromotor angetriebenen Welle. Bei diesem Sensor wird an einem Ausgang eine Impulsfolge erzeugt, deren Frequenz ein Maß für ein gemessenes Drehmoment darstellt, wobei die Impulsweite von weiteren Signalen, die in der Impulspause dieser Frequenzsignale gesendet werden, den Wert eines Drehwinkels repräsentieren. Diese bekannte Meßvorrichtung stellt allerdings kein redundantes Sensorsystem dar, bei dem zwei unabhängig voneinander funktionierende Meßsysteme die gleiche Meßgröße erfassen. Unser nachfolgend beschriebener erfindungsgemäßer Positionssensor unterscheidet sich weiterhin dadurch vom Gegenstand diese Entgegenhaltung, daß bei unserem Positionssensor die beiden Meßsignale nicht ineinander verschachtelt werden, sondern nacheinander über die gleichen Ausgangsleitung ausgegeben werden.

Positionssensoren, die mehrere unterschiedlich aufgebaute Positionssensoren umfassen, welche positionsabhängig unterschiedliche variierende pulsweitenmoduliertes Signale erzeugen, können gegenüber einfachen Positionssensoren eine deutlich höhere Auflösung und Meßgenauigkeit erreichen.

Die Übertragung der Signale vom Positionssensor als Sender zu einem Empfänger kann über ein Bus-System, z.B. das in Kraftfahrzeugen verbreitete CAN-Bus-System, erfolgen. Hierzu wird ein Mikroprozessor mit Quarz, ein CAN-Modul, ein CAN-Treiber, sowie eine CAN-Drossel benötigt. Dies ist kostenaufwendig und bringt zusätzliche Probleme wie Störabstrahlung, Bauraumbedarf usw.

Weiterhin ist nachteilig, daß Echtzeitregelungen mit kurzer Regelzykluszeit und hohen Datenraten den CAN-Bus unakzeptabel hoch belasten. Dieses Problem verschärft sich noch, wenn Signale mit hoher Auflösung (mehr Bits), und diese, z.B. aus Sicherheitsgründen, auch noch redundant übertragen werden müssen. Hierbei kommt es zu nicht vorhersagbaren Signalverzögerungen auf dem Bus, die die Regeleigenschaften verschlechtern.

Es ist daher die Aufgabe der Erfindung, einen einfachen und kostengünstig aufgebauten Positionssensor zu schaffen, der als Sensorsignal mehrere positionsabhängig variierende pulsweitenmodulierte Signale erzeugt und diese an einen Empfänger überträgt und dabei die oben genannten Nachteile vermeidet.

Diese Aufgabe wird erfindungsgemäß dadurch gelöst, daß der Positionssensor die Signale der einzelnen Meßsysteme in einer festgelegten Folge von Einzelimpulsen nacheinander über die gleiche Ausgangsleitung an einen Empfänger überträgt, wobei die Sensorsignale jeweils im Tastverhältnis eines Pulses kodiert sind.

Der erfindungsgemäße Positionssensor überträgt somit seine Signale, und zwar unabhängig von einem Bussystem, als Abfolge pulsweitenmodulierter Signale. Ein solches Übertragungssystem ist einfach und kostengünstig der Schaltung des Positionssensors, die vorteilhafterweise als ASIC ausgeführt ist, hinzuzufügen.

Die einzelnen Meßwerte verschiedener Signalquellen werden nacheinander, jeweils ein Puls für den Meßwert einer Signalquelle, übertragen, wobei die Information in dem Tastverhältnis des Pulses enthalten ist. Die Reihenfolge der Signale ist dem Empfänger bekannt.

Zur notwendigen Synchronisation sind in den abhängigen Ansprüchen verschiedene Verfahren beschrieben. So kann eine Steuerleitung zur Synchronisation vorgesehen werden. Die Synchronisation kann aber auch unmittelbar auf der Ausgangsleitung erfolgen, auf der auch die Signale übertragen werden. Hierzu ist es zweckmäßig, ein Signalübertragungsverfahren vorzusehen, bei dem die Modulationsbandbreite der pulsweitenmodulierten Signale begrenzt wird. Ein Positionssensor, der ein solches Verfahren ausführt, ist in der nicht vorveröffentlichten deutschen Patentanmeldung DE 199 27 152 beschrieben. Die Steuersignale können so durch Modulationsgrade repräsentiert werden, die außerhalb der begrenzten Modulationsbandbreite für die Sensorsignale liegen.

Weiter vorteilhafte Ausgestaltungen und Weiterbildungen des erfindungsgemäßen Positionssensors gehen aus den abhängigen Ansprüchen hervor.

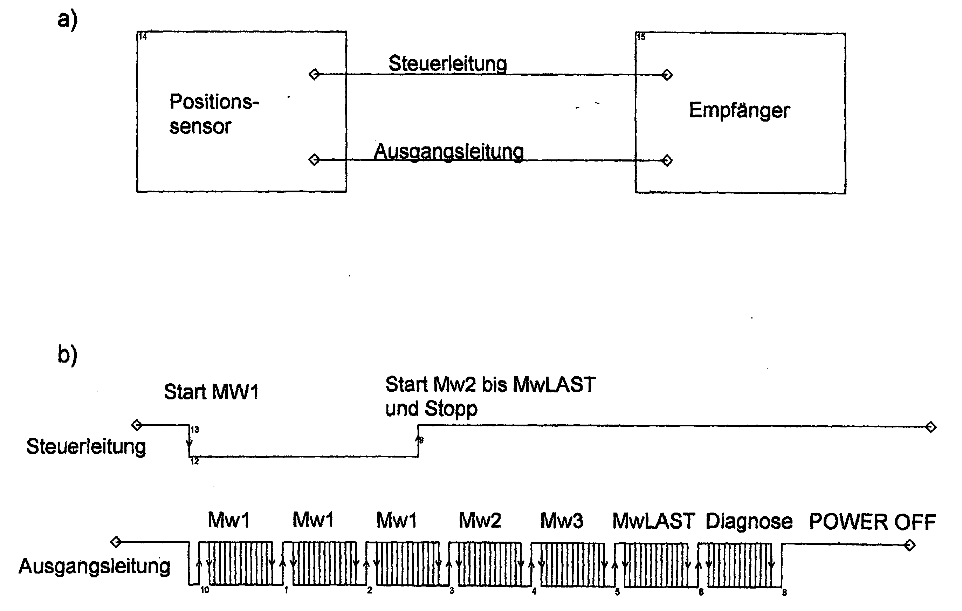

Im folgenden soll die Funktionsweise des erfindungsgemäßen Positionssensors anhand der Zeichnung dargestellt und erläutert werden.

Die einzige Figur zeigt die Anordnung von einem Positionssensor und einem Empfänger, die über eine Ausgangs- und eine Steuerleitung miteinander verbunden sind (a), sowie einen typischen Signalverlauf auf den Verbindungsleitungen zwischen dem Positionssensor und dem Empfänger (b). Solange die Steuerleitung auf LOW ist, wird periodisch der Meßwert Mw1 übertragen (Normalbetrieb). Nach Übergang auf HIGH werden nacheinander einmalig Mw2, Mw3, MwLAST und ein Diagnosewert (Diagnose) übertragen. Danach kann der Positionssensor in den Schlaf-Modus (POWER OFF) übergehen.

Durch die nächste HIGH/LOW-Flanke auf der Steuerleitung kann der Positionssensor geweckt werden. Er sendet dann bis zur nächsten LOW/HIGH-Flanke periodisch den Meßwert MW1.

## Patentansprüche

1. Positionssensor für ein Kraftfahrzeug,
mit mehreren unabhängig voneinander arbeitenden Meßsystemen, welche jeweils ein positionsabhängig variierendes pulsweitenmoduliertes Signal erzeugen,
**dadurch gekennzeichnet,**
**daß** der Positionssensor die Signale der einzelnen Meßsysteme in einer festgelegten Folge von Einzelimpulsen nacheinander über die gleiche Ausgangsleitung an einen Empfänger überträgt, wobei die Sensorsignale jeweils im Tastverhältnis eines Pulses kodiert sind.

2. Positionssensor nach Anspruch 1, **dadurch gekennzeichnet, daß** der Positionssensor eine Steuerleitung zum Empfänger aufweist, über welche die Steuerung und Synchronisation der Signalübertragung erfolgt.

3. Positionssensor nach Anspruch 1, **dadurch gekennzeichnet, daß** der Positionssensor über die Ausgangsleitung auch Signale zur Steuerung und Synchronisation der Signalübertragung überträgt.

4. Positionssensor nach Anspruch 1, **dadurch gekennzeichnet, daß** der Gesamtmeßbereich des Positionssensors in mehrere gleichartige, aufeinanderfolgende Meßbereiche unterteilt ist, und daß der Positionssensor zu seinem digitalisierten Meßwert einen festen Offsetwert addiert, wobei die Summe aus dem minimal möglichen Meßwert und dem Offsetwert einem pulsweitenmodulierten Signal mit einem minimalen Modulationsgrad, der größer ist als 0%, entspricht und die Summe aus dem maximal möglichen Meßwert und dem Offsetwert einem pulsweitenmodulierten Signal mit einem maximalen Modulationsgrad, der kleiner ist als 100%, entspricht.

5. Positionssensor nach Anspruch 4, **dadurch gekennzeichnet, daß** die Signale zur Steuerung und Synchronisation der Signalübertragung einen Modulationsgrad aufweisen, der zwischen 0% und dem minimalen zur Übertragung der Meßwerte verwendeten Modulationsgrad und/oder zwischen dem maximalen, zur Übertragung der Meßwerte verwendeten Modulationsgrad und einem Modulationsgrad von 100% liegt.

6. Positionssensor nach Anspruch 1, **dadurch gekennzeichnet, daß** die Steuerung der Signalübertragung zwischen dem Positionssensor und dem Empfänger bidirektional erfolgt.

7. Positionssensor nach Anspruch 2, **dadurch gekennzeichnet, daß** der Positionssensor über die Steuerleitung oder die Ausgangsleitung in einen anderen Betriebsmodus, wie z.B. einen Testmodus oder einen Schlafmodus mit reduzierter Funktion und reduzierter Leistungsaufnahme, geschaltet werden kann.

8. Positionssensor nach Anspruch 2, **dadurch gekennzeichnet, daß** eine Versorgungsleitung des Positionssensors gleichzeitig als Signalausgangsleitung fungiert oder die Steuerleitung gleichzeitig eine Versorgungsleitung des Positionssensors ist.

9. Positionssensor nach Anspruch 1, **dadurch gekennzeichnet, daß** der Positionssensor als ASIC ausgeführt ist.

10. Positionssensor nach Anspruch 1, **dadurch gekennzeichnet, daß** der Positionssensor mehrere unterschiedliche Positionssensoren umfaßt.

## Claims

1. Position sensor for a motor vehicle,
having a plurality of measuring systems operating independently, each producing a pulse-width-modulated signal which varies dependent on position,
**characterized in that**
the position sensor successively transmits the signals of the individual measuring systems in a fixed sequence of individual pulses via the same output line to a receiver, the sensor signals in each case being coded in the duty factor of a pulse.

2. Position sensor according to Claim 1, **characterized in that** the position sensor has a control line to the receiver by way of which the signal transmission is controlled and synchronized.

3. Position sensor according to Claim 1, **characterized in that** by way of the output line the position sensor also transmits signals for controlling and synchronizing the signal transmission.

4. Position sensor according to Claim 1, **characterized in that** the total measuring range of the position sensor is divided into a plurality of homogeneous consecutive measuring ranges, and **in that** the position sensor adds a fixed offset value to its digitalized measured value, the sum of the minimum possible measured value and the offset value corresponding to a pulse-width-modulated signal with a minimum degree of modulation, which is greater than 0%, and the sum of the maximum possible measured value and the offset value corresponding to a pulse-width-modulated signal with a maximum degree of modulation, which is less than 100%.

5. Position sensor according to Claim 4, **characterized in that** the signals for controlling and synchronizing the signal transmission have a degree of modulation, which lies between 0% and the minimum degree of modulation used for transmission of the measured values and/or between the maximum degree of modulation used for transmission of the measured values and a degree of modulation of 100%.

6. Position sensor according to Claim 1, **characterized in that** the control of the signal transmission between the position sensor and the receiver is bidirectional.

7. Position sensor according to Claim 2, **characterized in that** the position sensor can be switched by way of the control line or the output line into a different operating mode, such as for example a test mode or a sleep mode with reduced function and reduced power consumption.

8. Position sensor according to Claim 2, **characterized in that** a supply line of the position sensor simultaneously functions as a signal output line or the control line is simultaneously a supply line of the position sensor.

9. Position sensor according to Claim 1, **characterized in that** the position sensor is in the form of an ASIC.

10. Position sensor according to Claim 1, **characterized in that** the position sensor comprises a plurality of different position sensors.

## Revendications

1. Capteur de position pour véhicule automobile comportant plusieurs systèmes de mesure travaillant de façon indépendante les uns des autres et qui produisent respectivement un signal modulé selon une modulation d'impulsions en durée et qui varie en fonction de la position,
**caractérisé en ce**
**que** le capteur de position transmet les signaux des différents systèmes de mesure successivement selon une succession fixée d'impulsions individuelles par l'intermédiaire de la même ligne de sortie à un récepteur, les signaux du capteur étant codés respectivement avec le taux d'activation d'une impulsion.

2. Capteur de position selon la revendication 1, **caractérisé en ce que** le capteur de position comporte une ligne de commande aboutissant au récepteur et au moyen de laquelle la commande et la synchronisation de la transmission de signaux sont exécutées.

3. Capteur de position selon la revendication 1, **caractérisé en ce que** le capteur de position transmet par l'intermédiaire de la ligne de sortie, également des signaux pour la commande et la synchronisation de la transmission de signaux.

4. Capteur de position selon la revendication 1, **caractérisé en ce que** la gamme de mesure complète du capteur de position est divisée en plusieurs plages de mesure identiques successives et que le capteur de position additionne une valeur de décalage fixe à sa valeur de mesure numérisée, la somme de la valeur de mesure minimale possible et de la valeur de décalage correspondant à un signal modulé selon une modulation d'impulsions en durée avec un degré de modulation minimum, qui est supérieur à 0 %, et la somme de la valeur de mesure maximale possible et de la valeur de décalage correspondant à un signal modulé selon une modulation d'impulsions en durée possédant un degré maximum de modulation, qui est inférieur à 100 %.

5. Capteur de position selon la revendication 4, **caractérisé en ce que** les signaux pour la commande et la synchronisation de la transmission de signaux possèdent un degré de modulation qui est compris entre 0 % et le degré de modulation minimum utilisé pour la transmission des valeurs de mesure et/ou entre le degré de modulation maximum utilisé pour la transmission dès valeurs de mesure et un degré de modulation de 100 %.

6. Capteur de position selon la revendication 1, **caractérisé en ce que** la commande de la transmission de signaux entre le capteur de position et le récepteur s'effectue de façon bidirectionnelle.

7. Capteur de position selon la revendication 2, **caractérisé en ce que** le capteur de position peut être commuté par l'intermédiaire de la ligne de commande ou de la ligne de sortie dans un autre mode de fonctionnement, comme par exemple un mode de test ou un mode de sommeil avec une fonction réduite et une consommation de puissance réduite.

8. Capteur de position selon la revendication 2, **caractérisé en ce qu'**une ligne d'alimentation du capteur de position fonctionne simultanément en tant que ligne de sortie de signaux ou la ligne de commande est simultanément une ligne d'alimentation du capteur de position.

9. Capteur de position selon la revendication 1, **caractérisé en ce que** le capteur de position est agencé sous la forme d'un dispositif ASIC.

10. Capteur de position selon la revendication 1, **caractérisé en ce que** le capteur de position comporte plusieurs capteurs de position différents.
